# EUROPÄISCHE PATENTSCHRIFT

(11) **EP 1 469 036 B1**
(45) Veröffentlichungstag und Bekanntmachung des Hinweises auf die Patenterteilung: **19.10.2005**
(21) Anmeldenummer: 03405189.6
(22) Anmeldetag: 19.03.2003
(51) Int. Cl.: C08L 33/00, C08J 3/24

(54) **UV-härtender schmelzklebstoff**
UV-curing hot melt adhesive
Adhesif thermofusible durcissant aux UV

(43) Veröffentlichungstag der Anmeldung: 20.10.2004
(73) Patentinhaber: Collano AG, 6203 Sempach-Station (CH)
(72) Erfinder: Matijasic, Christelle, 6213 Knutwil (CH); Frei, Pia, 6221 Rickenbach (CH); Dobmann, Andreas, 6208 Oberkirch (CH)
(74) Vertreter: Hepp, Dieter

(56) Entgegenhaltungen:
- DE-C- 10 008 842
- BASF, [Online] XP002249742 Gefunden im Internet: <URL:http://www.basf.de/de/corporate/innov ationen/fakten/polymerforschung/Weg_zur_I nnovation/acresin.htm?id=V00-*u2wtPF**bsf3 00> [gefunden am 2003-07-31]
- BASF, [Online] XP002249743 Gefunden im Internet: <URL:http://www.basf.de/en/corporate/innov ationen/erklaert/haftkleber/hintergrund.ht m?id=V00-*u2wtSN**bsf400> [gefunden am 2003-07-31]
- AKZO NOBEL RESINS, [Online] XP002249744 Gefunden im Internet: <URL:http://www.eastechchemical.com/tinf/p rdl/S16en.shtml> [gefunden am 2003-07-31]

## Beschreibung

Die Erfindung betrifft eine UV-härtbare Zusammensetzung, die Verwendung dieser UV-härtbaren Zusammensetzung als Schmelzklebstoff und ein Beschichtungsverfahren mit der Zusammensetzung zur Anwendung bei temperaturempfindlichen Trägermaterialien.

Schmelzklebstoffe gewinnen zunehmend an Bedeutung für verschiedene Klebe-Anwendungen in der Industrie. Hierbei weisen vernetzbare Schmelzklebstoffe den Vorteil auf, dass diese Materialien sich zuerst als geschmolzener Film auf einen Träger aufbringen lassen und durch Vernetzungsreaktion zu hochmolekularen Verbindungen modifiziert werden können. Diese Vernetzungsreaktion lässt sich thermisch oder mittels Strahlung, insbesondere Strahlung im UV-Lichtbereich initiieren. Durch die Schmelzfähigkeit dieser Klebstoffe lässt sich weitgehend ein Einsatz von Lösungsmitteln mit den bekannten Nachteilen vermeiden.

Diese vernetzbaren Schmelzklebstoffe basieren meist auf Polymerisaten mit entsprechenden, reaktiven Gruppen. Mit UV-Licht vernetzbare Polymerisate sind beispielsweise aus DE-A 3 844 444, DE-A 10 103 428, WO-A 01/23488, WO-A 01/23489 oder WO-A 01/84544 und den in diesen Schriften zitierten Dokumenten bekannt.

In der Regel werden diese vernetzbaren Schmelzklebestoffe bei Temperaturen zwischen 120 und 160°C verarbeitet, d.h. auf ein Substrat aufgebracht. Es hat sich gezeigt, dass jedoch diese Vorgehensweise nicht für alle Substratmaterialien und Auftragsverfahren geeignet ist. Verschiedene Materialien wie PE, PP oder PVC verlieren bei derartig hohen Temperaturen ihre Stabilität und verformen sich oder werden gar teilweise zerstört. Für bestimmte Auftragsverfahren wie beispielsweise Siebdruck gilt eine obere, tolerierbare Viskositätsgrenze. Auch hier kann eine Erhöhung der Auftragstemperatur zwecks Senkung der Schmelzviskosität zur Zerstörung des Substrates führen. Versuche, die Verarbeitungs- und Auftragungstemperatur durch einen Additivzusatz abzusenken, führen zu dem Nachteil des sogenannten Foggings, d.h. dem Entweichen dieser Zusätze aus der belichteten Schmelzklebstoff-Zusammensetzung. Ein derartiges Ausdampfen der Zusätze sind jedoch bei verschiedenen Anwendung, z.B. in der Automobil- oder Flugzeugindustrie nicht tolerierbar.

Die Aufgabe der vorliegenden Erfindung ist es, die Nachteile des Bekannten zu vermeiden, und insbesondere einen UV-vernetzbaren Schmelzklebstoff bereitzustellen, welcher sich ohne gravierende Einschränkungen seiner Eigenschaften bei niedrigeren Temperaturen verarbeiten lässt.

Dies wird durch eine Zusammensetzung mit einem UV-vernetzbaren Polyacrylat, der Verwendung dieser Zusammensetzung sowie durch ein damit ausführbares Beschichtungsverfahren gemäss den unabhängigen Ansprüchen gelöst.

Die erfindungsgemässe Zusammensetzung enthält ein schmelzfähiges, mit UV-Licht vernetzbares Polyacrylat und optional Additive und wird gekennzeichnet durch mindestens eine oligomere Verbindung mit UV-vernetzbaren funktionellen Gruppen, die mit dem Polyacrylat reaktionsfähig sind.

Die oligomere Verbindung weist vorzugsweise daher mindestens eine UV-vernetzbare funktionelle Gruppe auf. Weiter vorteilhaft ist die oligomere Verbindung in der Menge so ausgewählt ist, dass im wesentlichen mindestens eine funktionelle Gruppe je oligomerer Verbindung mit dem Polyacrylat reagiert.

Die oligomere Verbindung besitzt weiter vorteilhaft eine geringere Viskosität als das Polyacrylat, wodurch die oligomere Verbindung als eine Art Verdünner wirkt.

In einer bevorzugten Ausführungsform weist die oligomere Verbindung eine Viskosität zwischen 0.1 und 20 Pa.s bei 25°C auf (Messsystem Brookfield). Das Polyacrylat weist vorteilhaft eine Viskosität von 1 bis 100 Pa.s bei 130°C auf (Messsystem Kegel/Plate, EN ISO 3219).

Das mit UV-Licht härtbare bzw. vernetzbare Polyacrylat ist ein radikalisch polymerisiertes Polymerisat, welches zu mindestens 50 Gew.-% des Polymerisats aus C₂- bis C₁₈-Alkyl(meth)acrylaten besteht, wobei es sich bei 0.1 bis 30 Gew.-% der Monomeren, aus denen das Polymerisat aufgebaut ist, um Monomere A ohne Carbonsäure- oder Carbonsäureanhydridgruppen und mit einer Wasserlöslichkeit grösser 5 g Monomere pro Liter Wasser handelt. Das Polymerisat wird aus ethylenisch ungesättigten, radikalisch polymerisierbaren Verbindungen erhalten. Dieses Polymerisat besteht vorzugsweise zu 50 bis 99.85 Gew.-%, bevorzugt zu 60 bis 99.4 Gew.-% und besonders bevorzugt zu 80 bis 98.9 Gew.-% bezogen auf das Polymerisat aus C₂- bis C₁₈-Alkyl(meth)acrylaten. Bevorzugt sind C₂- bis C₁₀-Alkyl(meth)acrylate, z.b. n-Butylacrylat, Ethylacrylat und 2-Ethylhexylacrylate. Insbesondere werden Mischungen der Alkyl(meth)acrylate verwendet.

Zur Verbesserung der Vernetzung kann das Polymerisat einen UV-Licht empfindlichen Photoinititator enthalten. Der Photoinitiator kann an das Polymerisat gebunden sein, er kann aber auch ungebunden und lediglich mit dem Polymerisat vermischt sein. Übliche Photoinitiatoren, die dem Polymerisat zugesetzt werden können, sind z.B. Acetophenon, Benzoinether, Benzyldialkylketole oder deren Derivate. Der Gehalt des zugemischten Photoinitiators beträgt vorzugsweise 0.05 bis 10 Gew. Teile, und besonders bevorzugt 0.1 bis 2 Gew. Teile pro 100 Gew. Teile Polymerisat.

Durch Bestrahlung mit energiereichem Licht, insbesondere UV-Licht im Wellenlängenbereich zwischen 200 bis 450 nm, bewirkt der Photoinitiator ein beschleunigtes Einsetzen der Vernetzung des Polymeren, vorzugsweise durch eine chemische Propfreaktion des Photoinitiators mit einer räumlich benachbarten Polymerkette. Die Vernetzung kann beispielsweise durch Einschub einer Carbonylgruppe des Photoinitiators in eine benachbarte C-H-Bindung unter Ausbildung einer -C-C-O-H Gruppierung erfolgen. Grundsätzlich weist das Polyacrylat funktionelle Gruppen auf, die aufgrund ihrer Struktur eine Neigung zur Reaktion bei Bestrahlung mit Licht im UV-Bereich aufweisen. Dies sind zum Beispiel C-C-, C-O-, C-N-Mehrfachbindungen. Vorstellbar ist auch das konjugierte Vorliegen von diesen Doppel- oder Dreifachbindungen.

Im Fall eines einpolymerisierten Photoinitiators enthält das Polymerisat zu 0.05 bis 10 Gew.-%, bevorzugt zu 0.1 bis 2 Gew.-% und besonders bevorzugt 0.1 bis 1 Gew.-% (bezogen auf das Polymerisat) ethylenisch ungesättigte Verbindungen mit einer Photoinitiatorgruppe. Die ethylenisch ungesättigte Verbindung weist mindestens eine Acryl- oder Methacrylgruppe auf. Als Photoinitiatorkomponente sind Acteophenon- oder Benzophenonderivate geeignet. Bevorzugt ist dabei die Photoinitiatorgruppe durch eine Spacergruppe von der ethylenisch ungesättigten Gruppe der Verbindung getrennt. Diese Spacergruppe kann z.B. bis zu 100 C-Atome enthalten. Aufgrund der Spacergruppe wird die Wahrscheinlichkeit für eine intramolekulare Vernetzungs-Reaktion verringert und intermolekulare Vernetzung bevorzugt.

Geeignete Acetophenon- oder Benzophenonderivate sind z.B. in EP-A 346 734, EP-A 377 199 (1. Anspruch), DE-A 4 037 079 (1. Anspruch) und DE-A 3 844 444 (1. Anspruch) beschrieben und werden hiermit in die Offenbarung dieser Anmeldung aufgenommen. Die bevorzugten Acetophenon- und Benzophenonderivate sind solche der Formel 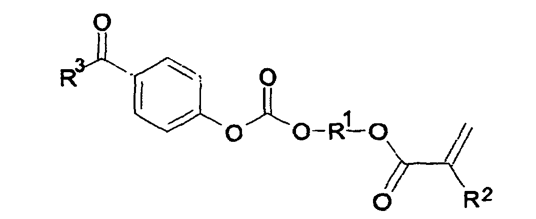 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂- bis C₈- Alkylengruppe.
R³ steht besonders bevorzugt für eine Methylgruppe oder eine Phenylgruppe. Weitere Monomere, aus denen das Polycrylat aufgebaut sein kann, sind z.B. Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomere.
Als vinylaromatische Verbindungen kommen z.B. Vinyltoluol, α-und β-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte, ethylenisch ungesättigte Verbindungen, bevorzugt Vinylchlorid und Vinylidenchlorid.
Als Vinylether zu nennen sind z.B. Vinylmethylether oder Vinylisobutylether. Bevorzugt wird Vinylether von 1 bis 4 C-Atome enthaltenden Alkoholen.
Als Kohlenwasserstoffe mit 2 bis 8 C-Atomen und zwei olefinischen Doppelbindungen seien Butadien, Isopren und Chloropren genannt.
Ale weitere Monomere in Betracht kommen insbesondere auch Monomere mit Carbonsäure-, Sulfonsäure- oder Phosphorsäuregruppen, wobei Carbonsäuregruppen bevorzugt sind. Beispiele sind Acrylsäure, Methacrylsäure, Itaconsäure, Maleinsäure oder Fumarsäure. Weitere Monomere sind beispielsweise auf Hydroxylgruppen enthaltende Monomere, insbesondere C₁- bis C₁₀-Hydroxyalkyl(meth)acrylate oder (Meth)acrylamid. Weiterhin sind Phenyloxyethylglykolmono-(meth)acrylat, Glycidylacrylat, Glycidylmethacrylat, Amino-(meth)acrylate wie 2-Aminoethyl(meth)acrylate genannt.
Monomere, die ausser der Doppelbindung noch weitere funktionelle Gruppen tragen, z.B. Isocyanat-, Amino-, Hydroxy-, Amid- oder Glycidyl-Gruppen, können beispielsweise die Haftung des Polymerisats verbessern.
Das Polyacrylat hat vorzugsweise einen K-Wert von 30 bis 80 und besonders bevorzugt von 40 bis 60, gemessen in Tetrahydrofuran (1%ige Lösung, 21°C). Der K-Wert nach Fikentscher ist ein Mass für das Molekulargewicht und Viskosität des Polymerisats. Die Glasübergangstemperatur (T_{g}) des Polymerisats beträgt vorzugsweise -60 bis +10°C, besonders bevorzugt -55 bis 0°C und ganz besonders bevorzugt -55 bis -10°C. Die Glasübergangstemperatur des Polyacrylates lässt sich nach üblichen Methoden wie Differentialthermoanalyse oder Diffenential Scanning Calorimetrie (s. z.B. ASTM 3418/82, sog. "midpoint temperature") bestimmen.

Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, z.B. in Wasser oder flüssigen Kohlenwasserstoffen, oder in Lösung polymerisiert wird. Vorzugsweise werden die Copolymerisate durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0.01 bis 10, insbesondere bei 0.1 bis 4 Gew.-% (bezogen auf das Gesamtgewicht der Monomeren) liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine mit einem Siedebereich von 60 bis 120°C in Frage. Es könne auch Ketone, wie Aceton, Methylethylketon, Methylisobutylketon und Ester, wie Essigsäureethylester sowie Gemische von Lösungsmitteln der genannten Art eingesetzt werden. Gemische, die Isopropanol und/oder Isobutanol in Mengen von 5 bis 95, insbesondere von 10 bis 80, vorzugsweise von 25 bis 60 Gew.% bezogen auf das eingesetzte Lösungsmittelgemisch enthalten, werden vorgezogen.
Als Polymerisationsinitiatoren kommen bei der Lösungspolymerisation z.B. Azoverbindungen, Ketonperoxide und Alkylperoxide in Betracht.
Nach der Polymerisation in Lösung können die Lösungsmittel gegebenenfalls unter reduziertem Druck abgetrennt werden. Dabei wird bei erhöhten Temperaturen, z.B. im Bereich von 100 bis 150°C gearbeitet. Die Polymerisate lassen sich nachfolgend im lösungsmittelfreien Zustand, d.h. als Schmelze, einsetzen. Manchmal ist es vorteilhaft, die UV-vernetzbaren Polymerisate durch Polymerisation in Substanz, d.h. ohne Mitverwendung eines Lösungsmittels herzustellen. Die Polymerisation der eingesetzten Komponenten kann dabei chargenweise oder kontinuierlich erfolgen, wie es z.B. in DE-A 2 439 341 beschrieben ist.

Die erfindungsgemässe Zusammensetzung kann weitere Additive enthalten, wie z.B. Stabilisatoren oder optische Aufheller.

Die oligomeren Verbindungen mit mindestens einer UV-vernetzbaren funktionellen Gruppe bewirken die vorteilhafte Absenkung der Verarbeitungstemperatur dieser Zusammensetzung. Als eine oligomere Verbindung ist im Rahmen der vorliegenden Erfindung ein Molekül zu verstehen, welches mindestens 2 bis 15 wiederkehrende Monomereinheiten in der Struktur aufweist. Im weiteren wird auf die Definition in Römpp, Lexikon Lacke und Druckfarben, Georg Thieme Verlag Stuttgart, New York, 1998, "Oligomere", Seite 425 verwiesen. Die mindestens eine UV-vernetzbare funktionelle Gruppe der oligomeren Verbindung ist derart ausgewählt, dass eine Reaktion mit den funktionellen Gruppen des Polymerisats bzw. der vorzugsweise im Polymerisat einpolymerisierten Photoinitiator-Gruppen erfolgt. Vorteilhafterweise sind diese UV-vernetzbaren Gruppen im wesentlichen endständig an der oligomeren Verbindung angeordnet. Durch diese Reaktionen wird das Molekül somit chemisch dauerhaft an das Polymerisat gebunden. Ein späteres Entweichen, beispielsweise ein Ausgasen aus der vernetzten Zusammensetzung wird so unterbunden. Bevorzugt weist die oligomere Verbindung mindestens zwei funktionelle Gruppen auf. Besonders bevorzugt ist eine oligomere Verbindung mit vier funktionellen Gruppen. Derartige geeignete, funktionelle Gruppen sind beispielsweise eine Vinyl-Gruppe oder eine Carbonyl-Gruppe. Vorstellbar ist auch das konjugierte Vorliegen mehrerer dieser Gruppen.

Die Menge der oligomeren Verbindung ist so zu wählen, dass zumindest eine der UV-vernetzbaren funktionellen Gruppe der oligomeren Verbindung innerhalb der Belichtungsphase der Zusammensetzung und/oder Abkühlphase der aufgeschmolzenen Zusammensetzung mit dem Polyacrylat eine chemisch dauerhafte, d.h. im wesentlichen eine kovalente Bindung eingeht. Durch die Mengenauswahl kann ein Ausdünsten der oligomeren Verbindung aus der belichteten und vernetzten Zusammensetzung unterbunden werden.

Die oligomere Verbindung besitzt vorteilhafterweise eine Viskosität zwischen 0.1 und 20 Pa.s bei 25°C. Ein derartiger Viskositätsbereich wirkt sich positiv auf die Verarbeitungsfähigkeit der erfindungsgemässen Zusammensetzung bei deutlich niedrigeren Temperaturen aus. Vorzugsweise weist die Verbindung eine Viskosität zwischen 2 und 17 Pa.s und besonders bevorzugt zwischen 4 und 15 Pa.s bei 25 °C auf (Messsystem Brookfield).

Bevorzugt weist die oligomere Verbindung ein Molekulargewicht von weniger als 2500 g/mol, vorzugsweise weniger als 1800 g/mol und weiter bevorzugt von weniger als 1400 g/mol auf.

Vorteilhaft ist die oligomere Verbindung ein Urethanacrylat, Epoxyacrylat, Polyesteracrylat oder Gemische davon. Die oligomere Verbindung besitzt vorzugsweise mindestens zwei funktionelle Gruppen und weiter vorteilhaft mindestens vier funktionellen Gruppen. Aufgrund der Mehrzahl an funktionellen Gruppen ist eine ausreichende Reaktivität der oligomeren Verbindung im Hinblick auf die Vernetzung sichergestellt. Besonders bevorzugt als oligomere Verbindung ist ein Urethanacrylat, insbesondere ein Urethanacrylat mit zwei funktionellen Gruppen. Weiter bevorzugt wird ein Urethanacrylat mit vier funktionellen Gruppen. Die Urethan-Funktionalität erweist sich zudem vorteilhaft für die Klebeeigenschaften der vernetzten Zusammensetzung. Durch eine entsprechenden Auswahl des Urethanacrylates kann somit zusätzlich Einfluss auf die Klebeeigenschaften genommen werden.

Weiterhin vorteilhaft ist eine erfindungsgemässe Zusammensetzung, in der das Polyacrylat 70 bis 98 Gew.-% und die oligomere Verbindung 2 bis 30 Gew.-% der gesamten Zusammensetzung umfasst. Bevorzugt enthält die Zusammensetzung 75 bis 95 Gew.-% an Polyacrylat und 5 bis 25 Gew.-% an oligomerer Verbindung.

Die erfindungsgemässe Zusammensetzung kann als vernetzbarer Schmelzklebstoff verwendet werden. Hierzu wird die Zusammensetzung auf eine Verarbeitungstemperatur zwischen 60 und 160°C, bevorzugt zwischen 70 und 140°C und besonders bevorzugt zwischen 80 und 120°C erhitzt und auf ein Substrat aufgebracht. Als Substrat kann eine Folie, ein Papier, ein Kunststoffsubstrat oder ein Textil dienen. Die Folie bzw. das Kunststoffsubstrat kann aus PET, PE, PP, Polyamid oder PUR bestehen. Die erfindungsgemässe Zusammensetzung lässt sich sehr vorteilhaft auf temperaturempfindliche Materialien aufbringen, da diese Materialien bei der Auftragungstemperatur nicht zerstört werden. Der Auftrag der vernetzbaren Schicht erfolgt mit einer Schichtdicke zwischen 1 und 200 µm, vorzugsweise zwischen 10 und 140 µm und besonders bevorzugt zwischen 15 und 80 µm. Eine nachfolgende Belichtung mit UV-Licht, vorzugsweise im Wellenlängenbereich zwischen 200 und 300 nm, startet die Vernetzungsreaktion der Zusammensetzung. Als Licht-Quelle kann beispielsweise ein UV-Laser oder eine Hg-Lampe eingesetzt werden. Die aufgetragene Zusammensetzung wird üblicherweise mit einer UV-Dosis (im Wellenlängenbereich von 200 bis 300 nm) von 0.01 bis 10 J/cm² belichtet. Dem Fachmann sind geeignete UV-Lichtquellen bekannt.
Die Vernetzung der Beschichtung erfolgt vorteilhafterweise im Vergleich zu einer Polyacrylat-Zusammensetzung, welche keinen erfindungsgemässen Zusatz der oligomeren Verbindung hat, deutlich schneller, so dass höhere Auftragsgeschwindigkeiten bzw. Verarbeitungsgeschwindigkeiten des beschichteten Substrats möglich sind.

Die vernetzten Zusammensetzungen erreichen trotz der deutlich niedrigeren Verarbeitungstemperatur identische Eigenschaften. Mit der erfindungsgemässen Zusammensetzung können Schertemperaturen (SAFT, Shear Adhesion Failure Temperature, gemessen in Anlehnung zu ASTM D4498-00, 25mm x 25mm, 1000 g, 0.5°C/min., 24 h. Verklebung) von rund 150°C erhalten werden.

Anhand der folgenden Beispiele wird die erfindungsgemässe Zusammensetzung näher erläutert. Die Prozentangaben sind jeweils Gewichtsprozent und bezogen auf das Gesamtgewicht der Zusammensetzung.

acResin® der Firma BASF wird als Polyacrylat-Komponente in der Zusammensetzung eingesetzt. Diese Substanzklasse zeichnet sich durch einpolymerisierte Monomere aus, an die unter Verwendung einer Spacergruppe als Abstandshalter UV-aktivierbare Photoinitiatorgruppen chemisch gebunden wurden. Durch unterschiedliche Verhältnisse der eingesetzten Monomere kann die Eigenschaft des Polymers gezielt verändert werden.

### Beispiel 1:

Zu 84.7 % acResin A 203 UV werden 15 % Actilane 276 (Fa. Akcros Chemical America, tetrafunktionales Urethanacrylat mit M_{w} von 1000 g/mol) sowie 0.3 % Irganox B 612 (Fa. Ciba SC) innig gemischt. Die Zusammensetzung ist bei Raumtemperatur hochviskos.
Das Gemisch wird für das Auftragen auf 100 bis 110 °C erhitzt und mit einem Schmelzklebstoffbeschichtungsgerät der Fa. Nordson auf eine PET-Folie (Fa. Wachendorf, 50 µm dick) aufgebracht. Das Auslösen der Vernetzung erfolgt durch Belichtung mit einem Belichtungsgerät UV Minicure Anlage (Fa. IST) bei einer Transportgeschwindigkeit von 10 m/min und einer Lampenleistung von 160 W/cm. Die Leistung der verwendeten UV-Lichtquelle beträgt dabei 0.8 J/cm² (im Wellenlängenbereich von 200 bis 300 nm).
Mit einem verklebten Teststreifen wurde eine SAFT-Temperatur von grösser als 150 °C ermittelt.

### Beispiel 2:

Eine Mischung aus 89.7% acResin A 203 UV, 10% Actilane 276 und 0.3% Irganox B 612 wird analog zu Beispiel 1 hergestellt und bei einer Temperatur von 100-120 °C auf ein PET-Substrat aufgebracht. Es wurde eine SAFT-Temperatur von grösser als 140 °C ermittelt.

Die Beispiel-Zusammensetzungen wurden nach der Belichtung und der erfolgten Vernetzung hinsichtlich ihres Fogging-Verhaltens untersucht. Unter Fogging wird wie vorstehend erläutert das nachteilige Ausgasen von Monomeren oder kleinen Molekülen verstanden, das bei bestimmten Anwendungen nicht auftreten darf. Die Proben (ca. 200 cm² Fläche) wurden in einem Glaszylinder mittels eines Ölbades für 16 Stunden auf 100°C erhitzt. Der Deckel dieses Zylinders wurde gleichzeitig aktiv auf 21°C gekühlt. Durch Differenzwägung des Deckels vor und nach der Temperaturbehandlung wurde der Anteil an flüchtigen Bestandteile der vernetzten Zusammensetzung ermittelt (gemäss DIN 75210 B). Die untersuchten Proben zeigten dabei keinen, d.h. ausserhalb des Fehlerbereichs der Methode liegenden Masseverlust.

## Patentansprüche

1. Zusammensetzung enthaltend ein schmelzfähiges, UVvernetzbares Polyacrylat und optional Additive, **dadurch gekennzeichnet, dass** die Zusammensetzung eine oligomere Verbindung mit UV-vernetzbaren funktionellen Gruppen enthält, die mit dem Polyacrylat reaktionsfähig sind.

2. Zusammensetzung nach Anspruch 1, **dadurch gekennzeichnet, dass** die Viskosität der oligomeren Verbindung niederer ist als die Viskosität des Polyacrylats.

3. Zusammensetzung nach Anspruch 1 oder 2, **dadurch gekennzeichnet, dass** die oligomere Verbindung eine Viskosität zwischen 0.1 und 20 Pa.s bei 25°C aufweist.

4. Zusammensetzung nach Anspruch 1 oder 2, **dadurch gekennzeichnet, dass** das Polyacrylat eine Viskosität zwischen 1 und 100 Pa.s bei 130°C aufweist.

5. Zusammensetzung nach einem der Ansprüche 1 bis 4, **dadurch gekennzeichnet, dass** das Polyacrylat aus einem Polymerisat mit 0.05 bis 10 Gew.-% aus ethylenisch ungesättigten Verbindungen mit einer Photoinitiatorgruppe besteht.

6. Zusammensetzung nach einem der vorangehenden Ansprüche, **dadurch gekennzeichnet, dass** die oligomere Verbindung ein Urethanacrylat, bevorzugt ein Urethanacrylat mit zwei vernetzbaren funktionellen Gruppe und besonderes bevorzugt ein Urethanacrylat mit vier vernetzbaren funktionellen Gruppen, ist.

7. Zusammensetzung nach einem der vorangehenden Ansprüche, **dadurch gekennzeichnet, dass** das Polyacrylat 70 bis 95 Gew.-% und die oligomere Verbindung 5 bis 30 Gew.-% der gesamten Zusammensetzung umfasst.

8. Zusammensetzung nach einem der vorangehenden Ansprüche, **dadurch gekennzeichnet, dass** die Zusammensetzung einen UV-Initiator enthält.

9. Zusammensetzung nach einem der Ansprüche 6 bis 8, **dadurch gekennzeichnet, dass** das Urethanacrylat ein Molekulargewicht von weniger als 2500 g/mol, vorzugsweise weniger als 1800 g/mol aufweist.

10. Zusammensetzung nach einem der vorangehenden Ansprüche, wobei die oligomere Verbindung in der Menge so ausgewählt ist, dass im wesentlichen mindestens eine funktionelle Gruppe je oligomerer Verbindung mit dem Polyacrylat reagieren kann.

11. Verfahren zur Beschichtung eines Substrates mit einer klebefähigen Schicht, enthaltend die Schritte:
- Bereitstellen einer Zusammensetzung nach einem der Ansprüche 1 bis 10;
- Aufschmelzen der Zusammensetzung und Aufbringen auf ein Substrat; und
- Bestrahlung der aufgebrachten Zusammensetzung mit ultravioletter Strahlung zur Vernetzung der in der Zusammensetzung enthaltenen Komponenten.

12. Verfahren nach Anspruch 11, **dadurch gekennzeichnet, dass** das Aufschmelzen im Temperaturbereich zwischen 70 und 140°C erfolgt.

13. Verfahren nach Anspruch 11 oder 12, **dadurch gekennzeichnet, dass** die Zusammensetzung mit einer Schichtdicke zwischen 1 und 200 µm, vorzugsweise zwischen 10 und 140 µm auf das Substrat aufgebracht wird.

## Claims

1. Composition comprising a meltable, UV-crosslinkable polyacrylate and optionally additives, **characterized in that** the composition comprises an oligomeric compound having UV-crosslinkable functional groups which are reactive with the polyacrylate.

2. Composition according to Claim 1, **characterized in that** the viscosity of the oligomeric compound is lower than the viscosity of the polyacrylate.

3. Composition according to Claim 1 or 2, **characterized in that** the oligomeric compound has a viscosity of between 0.1 and 20 Pa.s at 25°C.

4. Composition according to Claim 1 or 2, **characterized in that** the polyacrylate has a viscosity of between 1 and 100 Pa.s at 130°C.

5. Composition according to any one of Claims 1 to 4, **characterized in that** the polyacrylate is composed of an addition polymer with 0.05% to 10% by weight of ethylenically unsaturated compounds having a photoinitiator group.

6. Composition according to any one of the preceding claims, **characterized in that** the oligomeric compound is a urethane acrylate, preferably a urethane acrylate having two crosslinkable functional groups, and more preferably a urethane acrylate having four crosslinkable functional groups.

7. Composition according to any one of the preceding claims, **characterized in that** the polyacrylate comprises 70% to 95% by weight and the oligomeric compound 5% to 30% by weight of the total composition.

8. Composition according to any one of the preceding claims, **characterized in that** the composition comprises a UV initiator.

9. Composition according to any one of Claims 6 to 8, **characterized in that** the urethane acrylate has a molecular weight of less than 2500 g/mol, preferably less than 1800 g/mol.

10. Composition according to any one of the preceding claims, wherein the amount of the oligomeric compound is selected such that essentially at least one functional group per oligomeric compound can react with the polyacrylate.

11. Method of coating a substrate with an adhesive layer, comprising the steps of:
- providing a composition according to any one of Claims 1 to 10;
- melting the composition and applying the melt to a substrate; and
- exposing the applied composition to ultraviolet radiation to crosslink the components present in the composition.

12. Method according to Claim 11, **characterized in that** the melting takes place in the temperature range between 70 and 140°C.

13. Method according to Claim 11 or 12, **characterized in that** the composition is applied with a layer thickness of between 1 and 200 µm, preferably between 10 and 140 µm, to the substrate.

## Revendications

1. Composition contenant un polyacrylate fusible et réticulable par des UV et éventuellement des additifs, **caractérisée en ce qu'**elle contient un composé oligomère avec des groupes fonctionnels réticulable par des UV qui sont aptes à réagir avec le polyacrylate.

2. Composition selon la revendication 1, **caractérisée en ce que** la viscosité du composé oligomère est inférieure à la viscosité du polyacrylate.

3. Composition selon la revendication 1 ou 2, **caractérisée en ce que** le composé oligomère a une viscosité située entre 0,1 et 20 Pa.s à 25°C.

4. Composition selon la revendication 1 ou 2, **caractérisée en ce que** le polyacrylate a une viscosité située entre 1 et 100 Pa.s à 130°C.

5. Composition selon l'une quelconque des revendications 1 à 4, **caractérisée en ce que** le polyacrylate se compose d'un produit de polymérisation avec 0,05 à 10 % en poids de composés éthylèniquement insaturés et comprenant un groupe photoinitiateur.

6. Composition selon l'une quelconque des revendications précédentes, **caractérisée en ce que** le composé oligomère est un acrylate d'uréthane, de préférence un acrylate d'uréthane avec deux groupes fonctionnels réticulables et, avec une préférence particulière, un acrylate d'uréthane avec quatre groupes fonctionnels réticulables.

7. Composition selon l'une quelconque des revendications précédentes, **caractérisée en ce que** le polyacrylate constitue 70 à 95% en poids et le composé oligomère 5 à 30 % en poids de la totalité de la composition.

8. Composition selon l'une quelconque des revendications précédentes, **caractérisée en ce qu'**elle contient un initiateur sensible aux UV.

9. Composition selon l'une quelconque des revendications 6 à 8, **caractérisée en ce que** l'acrylate d'uréthane a un poids moléculaire de moins de 2 500 g/mole, de préférence de moins de 1 800 g/mole.

10. Composition selon l'une quelconque des revendications précédentes, **caractérisée en ce que** la quantité du composé oligomère est choisie de telle façon que sensiblement au moins un groupe fonctionnel de chaque composé oligomère réagisse avec le polyacrylate.

11. Procédé de revêtement d'un substrat avec une couche pouvant être collée, comprenant les étapes suivantes :
- mise à disposition d'une composition selon l'une quelconque des revendications 1 à 10 ;
- fusion de la composition et application sur un substrat ; et
- application d'un rayonnement ultraviolet sur la composition appliquée pour réticuler les composants contenus dans la composition.

12. Procédé selon la revendication 11, **caractérisé en ce que** la fusion a lieu dans la plage de températures située entre 70 et 140°C.

13. Procédé selon la revendication 11 ou 12, **caractérisé en ce que** la composition est appliquée sur le substrat avec une épaisseur de couche située entre 1 et 200 µm, de préférence entre 10 et 140 µm.
